(19) Europäisches Patentamt
European Patent Office
Office européen des brevets

(11) Publication number: 0 028 898 A2

(12) # EUROPEAN PATENT APPLICATION

(21) Application number: 80303796.9

(22) Date of filing: 27.10.80

(51) Int. Cl.³: C 09 D 3/81
C 08 L 33/14

(30) Priority: 29.10.79 US 88911

(43) Date of publication of application: 20.05.81 Bulletin 81/20

(84) Designated Contracting States: BE DE FR GB IT NL SE

(71) Applicant: Rohm and Haas Company
Independence Mall West
Philadelphia, Pennsylvania 19105(US)

(72) Inventor: Sperry, Peter Reeves
49 Woodview Drive
Doylestown, Pennsylvania(US)

(74) Representative: Angell, David Whilton et al,
Rohm and Haas Company Patent Department
Chesterfield House Barter Street
London WC1A 2TP(GB)

(54) **Coating compositions comprising hydroxy ester, aminoplast and acrylic polyol oligomer and their use.**

(57) Coating compositions contain hydroxy esters, aminoplast and acrylic polyol oligomer. The esters may be formed by the reaction of $C_2$-$C_{12}$ diols or epoxy compounds with $C_2$-$C_{13}$ aliphatic dicarboxylic acids, or anhydrides or alkyl esters thereof. Bis-(ß-hydroxyalkyl) esters, such as bis-(ß-hydroxyethyl)adipate or azelate are preferred. N-methylol groups and/or N-methylol ether group-containing amino resins may be used as aminoplast and obtained by reaction of an aldehyde, such as formaldehyde, with a compound containing amino or amido groups, such as melamine or urea. Suitable oligomers have a weight average molecular weight of from 400 to 30,000 and a dispersity of from 1.1 to 10. These hydroxyl functional polymers may contain units of hydroxyalkyl acrylates and/or methacrylates.

EP 0 028 898 A2

Croydon Printing Company Ltd.

0028898



# COATING COMPOSITIONS COMPRISING HYDROXY ESTER, AMINOPLAST AND ACRYLIC POLYOL OLIGOMER AND THEIR USE.

This invention is concerned with coating compositions containing certain hydroxy esters, amino resin and low molecular weight hydroxyl functional acrylic polymers.

The most important amino resins (or aminoplasts, as they are frequently called) are the urea- and the melamine-formaldehyde compounds. The urea resins have been available since 1930 and the melamine resins since 1940. Thermosetting amino-resin (aminoplast) coating compositions are disclosed, for example, in U.S. Patents 3,082,184; 3,198,850; 3,852,375 and 3,857,817.

The amino resins are thermosetting materials that readily form hard, brittle, colourless, chemically resistant films or coatings on baking. Because of their brittleness and poor adhesion when used alone, they require proper plasticization for use in coatings. This is usually accomplished by combining them with short- or medium-oil alkyds. The amino-alkyd blends provide an excellent combination of coating properties in which the adhesion, toughness, gloss, and durability of the alkyd are complemented by the baking speed, hardness, colour retention, and chemical resistance of the amino component. The amino resin is used as the minor component and usually constitutes from 20 to 40 parts by weight of the resin solids on a parts per

hundred basis, although it may be as low as 5 to 10 parts by weight in some automobile finishes and as high as 50 parts by weight on a parts per hundred basis, in some low-bake furniture finishes.

We have now found that certain hydroxy esters are exceptionally and unexpectedly useful as reactive or co-curable diluents for thermosetting coatings containing amino resins. The esters may confer enhanced and high application solids and also remarkably improved flexibility on the coatings. The esters are especially useful in upgrading high solids coatings and coating compositions which contain low molecular weight hydroxyl functional acrylic polymers and melamine resins. The low molecular weight polymers require a high hydroxyl content to maintain an adequate functionality per molecule for crosslinking. The high crosslink density, together with the fact that melamine resins ordinarily confer hardness and brittleness, in their own right, usually results in coatings which are of marginally useful toughness. The reactive diluents described herein may overcome this problem.

We have found that addition of minor amounts, preferably 5 to 50, parts by weight on a parts per hundred basis, more preferably 10 to 40 parts by weight on a parts per hundred basis, of (a) certain hydroxy esters, preferably bis-(β-hydroxy-alkyl) esters of certain aliphatic dibasic acids to (b) amino resin and (c) low molecular weight hydroxy functional acrylic polymer for coating

compositions and coatings markedly improves the solids/viscosity balance. The cured films or coatings are more flexible and less brittle and often or frequently show improved water resistance. Components (b) and (c) comprising the remaining part of the binder (organic portion) are described in more detail hereinafter.

According to the invention there is provided a thermosetting amino resin coating composition comprising:

(a) at least one hydroxy ester of the formula:

$$H(O-R^1-O-\overset{O}{\overset{\|}{C}}R^2\overset{O}{\overset{\|}{C}}-)_n-O-R^3-OH$$

wherein $R^2$ represents a chemical bond or the group which would be formed by the removal of the carboxyl, anhydride or ester groups from an aliphatic dicarboxylic acid, or anhydride or ester thereof, said acid, anhydride or ester having from 2 to 13 carbon atoms; $R^1$ and $R^3$ represent the same or different groups which would be formed by the removal of the two hydroxyl groups from a diol or the oxirane oxygen atom from an epoxy compound, said diol or epoxy compound having from 2 to 12 carbon atoms, and n is an integer of from 1 to 3;

(b) an aminoplast, and

(c) an acrylic polyol oligomer having a weight average molecular weight of from 400 to 30,000 and a dispersity of from 1.1 to 10.

The hydroxy esters useful in the present invention are known materials and may be formed from one or more aliphatic dicarboxylic acids, an anhydride

or an alkyl ester thereof, the alkyl group preferably containing 1 to 4 carbon atoms, and from one or more dihydroxy alcohols (diols) and/or corresponding epoxy compounds. Any suitable aliphatic dicarboxylic acid or derivative may be used for example, oxalic acid, malonic acid, succinic acid, succinic anhydride, glutaric acid, adipic acid, azelaic acid, sebacic acid, maleic acid, maleic anhydride, fumaric acid, itaconic acid, citraconic acid and the like. It is preferred that use should be made of one or more aliphatic dicarboxylic acids with 2 to 13 carbon atoms, more particularly dicarboxylic acids having 4 to 9 carbon atoms, which acids may or may not be ethylenically unsaturated, for instance, maleic acid and/or adipic acid. It is preferred that use should be made of a diol having 2 to 9 carbon atoms. Preferred hydroxy esters are bis-(β-hydroxyalkyl) esters.

The number average molecular weight of the hydroxy ester is preferably from 192 to 2000, more preferably from 192 to 1000.

Any suitable diol and/or epoxy compound may be used to prepare the hydroxy ester, for example, ethylene glycol, ethylene oxide, propane-1,2-diol, propane-1,3-diol, propylene oxide, 2,2-dimethyl propane diol, butane-1, 2-diol, butane-1,3-diol, butane-1, 4-diol, butylene oxide, hexane-1,6-diol, diethylene glycol, triethylene glycol,dipropylene glycol, 2-ethyl hexane-1,6-diol, 2,2,4-trimethyl pentane-1, 3-diol, 2,2,4-trimethyl hexane-1,6-diol and octane-1,8-diol. It is preferred that a diol having 2 to 9 carbon atoms be used.

The esters for use in the invention may be prepared by any suitable manner. For example, one or more diols and/or epoxy compounds (such as those mentioned above) may be reacted with one or more dicarboxylic acids, an anhydride and/or an alkyl ester thereof in a molar ratio of the order of 2:1. Alternatively, a dicarboxylic anhydride may be first reacted with a diol in a molar ratio of the order of 1:1, after which the resulting reaction product is reacted with an epoxy compound, preferably in a molar ratio of the order of 1:1. The esterification reaction preferably takes place at an elevated temperature, for instance, at $115^{o}$ to $250^{o}C.$, in the presence, if desired, of one or more organic solvents, such as toluene or xylene. It is preferred that the reaction should be so carried out that the average number of ester groups per molecule of the prepared ester diol is in the range of 2 to 4 (i.e. n is 1 to 2). It will be appreciated that the hydroxy ester reaction product will often be a mixture of compounds. Thus while, in the above formula, n is an integer from 1 to 3 for an individual compound, for a mixture of compounds n is an average number of from 1 to 3. The reaction is generally carried out in the presence of an esterification catalyst in a usual concentration. The catalyst may be any of the known catalysts and may, for instance, be an acid catalyst such as p-toluene sulphonic acid, a basic compound such as an amine or compounds such as zinc oxide, tetraisopropyl orthotitanate and triphenyl benzyl phosphonium chloride.

Thus preferred hydroxy esters are derived from an aliphatic dicarboxylic acid (or anhydride or ester thereof) of the formula:

$$HOOC\ R^4\ COOH$$

wherein $R^4$ is a chemical bond or an alkylene or alkenylene group containing up to 11 carbon atoms. More preferred esters are similarly derived bis-(β-hydroxy alkyl) esters, especially bis -(β-hydroxyethyl) adipate and bis-(β-hydroxyethyl)azelate.

Any commonly available aminoplast may be used as curing agent for components (a), the hydroxy ester, and (c), the acrylic polyol oligomer hereinafter described and also forms part of the binder. The aminoplast preferably comprises N-methylol groups- and/or N-methylol ether groups-containing amino resin obtained by reacting an aldehyde such as formaldehyde, with a compound containing amino groups or amido groups, such as melamine, urea, N,N'-ethylene urea, dicyandiamide and benzoguanamine. The preparation of such compounds is described in Houben-Weyl, Methoden der organischen Chemie, Band 14/2, pp. 319-371 (1963). It is more preferred that the afore-described compounds should be entirely or partly etherified with alcohols having 1 to 6 carbon atoms, for instance, with methanol, ethanol, n-propanol, isopropanol, n-butanol, isobutanol, amyl alcohol, hexanol or mixtures of the alcohols referred to above. A preferred amino resin is a methylol melamine containing 4 to 6 methylol groups per molecule of melamine, at least 3 of

said methylol groups being etherified with at least one of methanol, ethanol and, preferably, with butanol, or a butanol-etherified condensation product of formaldehyde and N,N'-ethylene diurea. A more preferred amino resin is a hexalkoxymethyl melamine whose alkoxy groups contain 1 to 4 carbon atoms. The aminoplast is preferably used in such an amount that the molar ratio of the hydroxyl groups of the ester diol mixture to the reactive groups of the aminoplast is about from 0.7 to 1.5, preferably from o.8 to 1.3. The aminoplast preferably comprises from 10 to 50 parts by weight of the total organic components (binder) on a parts per hundred basis, more preferably, from 20 to 40 parts by weight on a parts per hundred basis, of the binder.

The third organic component (c) of the compositions of the invention is a low molecular weight polymeric acrylic polyol (oligomer), alternatively termed a hydroxyl functional acrylic oligomer. These acrylic oligomers may be formed by the methods taught in U.S. Patents 4,102,843; 4,059,616 and 4,103,093, which are incorporated herein by reference. The acrylic oligomer has a weight average molecular weight (Mw) of from 400 to 30,000, preferably from 400 to 20,000, more preferably from 1000 to 20,000. The dispersities (ratio of weight average molecular weight (Mw) to number average molecular weight (Mn) of the acrylic oligomers useful in the present invention are also quite low, generally being from 1.1 to 10, or higher preferably less than 5, and more preferably 1.1 to 3.

It will be understood that "acrylic" in this specification and claims includes materials containing or derived from the methacrylic group $CH_2=C(CH_3)CO-$ as well as, or instead of, materials containing or derived from the acrylic group $CH_2=CHCO-$.

Any of the materials mentioned in the aforementioned U.S. Patents, 4,103,093; 4,102,843, and 4,059,616 may be used in preparing the acrylic polyol oligomers useful in the present invention.

It should be noted that the method of initiation for the polymerization of the acrylic polyol oligomers is not critical to the practice of the present invention. Thus, in addition to the anionic polymerizations disclosed in U.S. Patent 4,103,093, and the others mentioned in the paragraph above, the acrylic polyol oligomers useful in the present invention include those prepared by conventional free radical polymerization as well as those prepared by non-catalytic types of initiation, such as by conventional thermal and photochemical means.

Thus the acrylic polyol oligomer (c) is a polymer having a weight average molecular weight and dispersity as described above and preferably contains units of at least one hydroxy alkyl acrylate and/or methacrylate. The polymer usually contains at least 50% by weight of acrylic and/or methacrylic units.

Preferably component (c) comprises at least one of: (i) polymer containing units of methyl methacrylate (MMA); butyl methacrylate (BMA); hydroxyethyl methacrylate (HEMA) and acrylic acid (AA), for example in the respective amounts by weight of 28-35 parts, 30-35 parts,

40-10 parts and 2-5 parts; (ii) polymer containing units of methyl methacrylate; butyl methacrylate; hydroxyethyl methacrylate and methacrylic acid (MAA), for example in the respective amounts by weight of 28-35 parts; 30-35 parts; 40-10 parts and 2-5 parts; A particularly useful oligomer comprises an acrylic polyol of MMA/BMA/HEMA/MAA in the proportions, by weight, of 28/30/40/2 having a Mw/Mn ratio of 2000/1300 (by gel permeation chromatography (GPC)) and a viscosity of 6000 cps. at 80% solids in cellosolve acetate.

(iii) polymer containing units of butyl acrylate (BA); styrene (S); hydroxyethyl methacrylate and acrylic acid, for example in the weight proportions 50/27/20/3 respectively; Aromatic monomers such as styrene and substituted styrenes may comprise up to 49% of the monomer units in the polymer (c), for example by substituting in whole or part for the butyl methacrylate or butyl acrylate when those monomers are used.

(iv) polymer containing units of methyl methacrylate; ethyl acrylate (EA); styrene, hydroxyethyl methacrylate and itaconic acid (1A); for example in the respective weight proportions 36.4/14.2/13.2/11/2.

(v) polymer containing units of methyl methacrylate butyl acrylate; hydroxypropyl methacrylate (HPMA) and methacrylic acid; for example in the respective weight proportions 35/50/10/5; (vi) polymer containing units of methyl methacrylate; butyl methacrylate, butyl acrylate; hydroxypropyl methacrylate and methacrylic acid; for example in the respective weight proportions 35/30/27.5/10/2.5.

Preferably these, and other, acrylic oligomers in the invention have a weight average molecular weight of from 500 to 2500 and dispersities as described above.

Other acrylic polyol oligomers will readily occur to those skilled in the art.

The acrylic polyol oligomer preferably comprises from 30 to 80 parts by weight of the binder on a parts per hundred basis, more preferably from 40 to 70 parts by weight on a parts per hundred basis of the total organic components of the coating composition.

The coating compositions of the invention may contain the usual auxiliary materials and additives, such as pigments and pigment dispersing agents, thixotropic agents or other means to influence the rheological properties, colorants, solvents and accelerators for the curing reaction, for instance, acid compounds such as paratoluene sulphonic acid or blocked products thereof.

The coating composition of the invention may be clear and pigment free or contain, for example, as little as 1 to 2% by weight of pigment in the case of metallic pigments such as aluminium and as much as 70-90% by weight of inorganic pigments, such as ZnO, $TiO_2$ or iron oxide or mixtures thereof, calculated on the total solids content of the coating composition. Suitable pigments include the usual kinds, namely acid, neutral or basic pigments which may be of an organic or inorganic nature. If desired, the pigments may

have been pre-treated to modify their properties. Suitable pigments include titanium dioxide, iron oxide, carbon black and phthalocyanine pigments. The term "pigments" is also understood to include metallic pigments such as those of aluminium, zinc and stainless steel. The coating composition ready for use has a viscosity generally not higher than 20 poises, preferably from 0.5 to 10 poises.

One embodiment of the invention provides a coating composition comprising from 1 to 90% by weight of pigment and from 10 to 99% by weight of a composition comprising components (a), (b) and (c) as described herein.

Another embodiment of the invention provides a substrate bearing a coating of the coating compositions of the invention described herein in cured form.

The coating compositions may be applied to a substrate in any desirable way, for instance, by roller coating, spraying, brushing, sprinkling, flow-coating, dipping or electrostatic spraying.

Further, the coating compositions may be cured or baked in the usual manner, for instance, at ambient temperature or at the usual elevated temperatures between, for example, 100° and 160°C, with a residence time of 20 to 60 minutes in a baking oven.

Some preferred embodiments of the invention will now be more particularly described in and by the following Examples in which all parts and percentages are by weight and all temperatures in degrees Celsius, unless otherwise stated.

Examples A,B and C illustrate preparation of hydroxy esters suitable for use in the compositions

of the invention.

Preparation of bis-(β-hydroxyalkyl) esters.

Example A

Preparation of Bis-(β-hydroxyethyl)adipate.
A three liter 3-neck flask equipped with a stirrer and a Dean-Stark trap is charged with 730.7g (5 mols) of adipic acid, 775.9g. (12.5 mols) of ethylene glycol, 10g. of Amberlyst 15 (a strong acid catalytic ion exchange resin from Rohm and Haas Co.) and 200g. of benzene. The solution is heated to reflux, and the water evolved is collected in the Dean-Stark trap. After 16 hours at reflux, the Amberlyst 15 is removed by filtration, and the benzene and excess ethylene glycol is removed by distillation at reduced pressure (final conditions of pot temperature 105°C. and 1 mm of vacuum). The product bis (β-hydroxyethyl)adipate remaining contained 5.4% ethylene glycol and had an acid titre of 0.26 meq./g.

Example B

(Preparation of Bis (β-hydroxyethyl)Azelate.
The procedure used in Example A is followed but using 941.2g. (5 mols) of azelaic acid and 775.9g. (12.5 mols) of ethylene glycol. After stripping the benzene and excess ethylene glycol as outlined above in Example A, the residual bis-(β-hydroxyethyl) acelate contained only 3.3% ethylene glycol and has an acid titre of 0.39 meq./g.

Example C

The bis-(β-hydroxyalkyl)esters may also be prepared by the method disclosed in J.Am.Chem.Society, Vol.57, pgs 115, 116, Jan. 1935 in an article entitled "Glycol Esters of Dibasic Acids. The di-β-hydroxyethyl Esters." As described therein, the

esterification of succinic, glutaric, adipic and sebacic acids with excess glycol at 100°C results in the formation of the corresponding di-β-hydroxyethyl esters or bis-(β-hydroxyethyl) esters as they are more preferably termed. The general method of preparation of the bis-(β-hydroxyethyl) ester is to esterify 0.05 gram mole of the dibasic acid with 0.5 gram mole of glycol at 100°C to 115°C. The excess glycol is then removed under reduced pressure by heating the mixture in an oil bath at 130-140°C for a period of one to two hours. (No esterification catalyst is required as the reaction proceeds readily at the esterification temperatures above-noted; however, a common esterification catalyst may optionally be used if desired such as p-toluene sulphonic acid, an amine or compounds such as zinc oxide). In the manner described above and using (a) the dibasic acid adipic acid and excess glycol in the proportions and at the esterification temperature above-noted, the bis-(β-hydroxyethyl)ester of adipic acid is prepared and (b) using azelaic acid and excess glycol in the proportions and at the esterification temperatures above-noted, the bis-(β-hydroxyethyl)ester of azelaic acid is prepared.

EXAMPLE 1

Unpigmented acrylic/melamine thermosetting coatings are prepared from the following resins:

Acrylic Polyol (oligomer)

Monomeric composition: MMA/BMA/HEMA/MAA = 28/30/40/2 (by weight)

Mw/Mn: 2000/1300 (GPC)*
Solids/Solvent: 80% in Cellosolve acetate
Viscosity: 6000 cps.

Melamine Resin (aminoplast)

An essentially non-volatile hexamethoxymethyl melamine resin, available commercially as Cymel® 301 from American Cyanamid is used.

Coatings are formulated in the following proportions:

| | Coating | | | |
|---|---|---|---|---|
| | A | % Solids | B | % Solids |
| Acrylic Polyol (80%) | 87.50 | 70.00 | 43.75 | 35.00 |
| Cymel 301 | 30.00 | 30.00 | 30.00 | 30.00 |
| bis-(β-hydroxyethyl)-azelate | | | 35.00 | 35.00 |
| p-toluene sulfonic acid (catalyst) | 0.20 | | 0.20 | |
| | | 100.00 | | 100.00 |

The coatings are filmed on Bonderite 1000 treated steel test panels (Parker Co.) to yield 1.7 mil thickness when dry, and cured at 149°C (300°F) for 30 minutes. The cured coatings are evaluated for hardness, impact strength, and water resistance with results as given below. Not only does the formulation containing bis-(β-hydroxyethyl)azelate have a markedly improved solids/viscosity balance, but also the cured films are substantially less brittle and have improved water resistance.

| | Coating | |
|---|---|---|
| | A | B |
| weight percent solids | 85 | 92 |
| Brookfield viscosity (cps) | 5200 | 950 |
| Tukon Hardness (KHN) | 15.4 | 3.2 |
| Gardner Impact J (in-lbs) | | |
| direct | 3.4(30) | 5.1(45) |
| reverse | 0.23 (2) | 1.7(15) |
| Water resistance (60°C) (140°F)/24 hr (ASTM) D714-56 | 8MD[1] | OK |

*by Gel permeation chromatography

1 on a scale of 0 to 10, 0 = many blisters, OK or 10 no blisters, 8MD = medium dense blisters.

EXAMPLE 2

Additional unpigmented acrylic/melamine compositions are formulated, cured, and evaluated using the resins of and according to the procedure of Example 1. Here, however, solids in all cases are adjusted to 84.5 weight percent with Cellosolve acetate and a dry film thickness of 1.4 mils is used.

The results demonstrate excellent viscosity reduction with both bis-(β-hydroxyethyl) adipate and the azelate. The adipate diluent confers somewhat greater hardness. Hardness characteristics can be controlled as desired by adjusting the ratio of resins and reactive diluent.

| Ingredients | Control | A | B | C | D | E | F | G | H |
|---|---|---|---|---|---|---|---|---|---|
| | Coating Compositions (pts) by weight) | | | | | | | | |
| Acrylic Polyol (100%) (solids) | 70 | 50 | 35 | 40 | 30 | 50 | 35 | 40 | 30 |
| Melamine resin | 30 | 30 | 30 | 40 | 40 | 30 | 30 | 40 | 40 |
| bis-(β-hydroxyethyl) azelate | | 20 | 35 | 20 | 30 | | | | |
| bis-(β-hydroxyethyl) adipate | | | | | | 20 | 35 | 20 | 30 |
| p-toluene sulfonic acid | 0.20 | 0.20 | 0.20 | 0.20 | 0.20 | 0.20 | 0.20 | 0.20 | 0.20 |
| Viscosity (Gardner-Holdt centistokes) $(10^{\cdot 6} m^2 5^{\cdot 1})$ | 2600 | 575 | 245 | 325 | 230 | 515 | 208 | 339 | 190 |
| **Film Properties** | | | | | | | | | |
| Tukon Hardness (KHN) | 12.4 | 10.3 | 4.8 | 10.4 | 7.9 | 11.4 | 9.0 | 11.9 | 12.4 |
| Pencil Hardness | 2H-3H | 2H | H | 2H | H | 2H-3H | 2H | 2H-3H | 2H-3H |
| Gardner Impact J | | | | | | | | | |
| direct | 1.8 | 4.3 | 9.0 | 5.4 | 5.1 | 3.8 | 5.1 | 3.2 | 3.9 |
| (in-lb) | (16) | (38) | (80) | (48) | (45) | (34) | (45) | (28) | (35) |
| reverse | 0.23 | 1.1 | 5.1 | 1.6 | 2.7 | 1.7 | 2.3 | 0.34 | 0.45 |
| (in-lb) | (2) | (10) | (45) | (14) | (24) | (15) | (20) | (3) | (4) |
| Water Resist. (60°C) (140°F) /24 hr) (ASTM) | 9VF* | OK | OK | OK | OK | OK | 9M | OK | OK |

*Very fine blisters, OK = no blisters

EXAMPLE 3

A pigmented high solids acrylic/melamine enamel using bis-(β-hydroxyethyl) azelate is prepared as follows:

| 3 Roll Mill Grind: | Parts by Weight |
|---|---|
| Rutile $TiO_2$ | 2000 |
| Acrylic polyol (80%) | 762 |
| n-Butyl acetate | 80 |
| n-Butanol | 80 |
| | 2922 |

After three passes through the roller mill the paste is formulated for spray application according to:

| | Parts by Weight |
|---|---|
| Paste | 2922.0 |
| Acrylic Polyol (80%) | 154.3 |
| Melamine Resin*(90%) | 950.6 |
| bis-(β-hydroxyethyl) azelate | 855.5 |
| n-Butyl acetate | 268.7 |
| n-Butyl alcohol | 268.8 |
| | 5419.9 |

* A methylated melamine-formaldehyde resin available as Resemene 740 (Monsanto): W-Z2 viscosity at 90% solids in isopropyl alcohol.

Enamel viscosity is 28 seconds (No.4 Ford Cup) at 82 weight percent solids. Solids characteristics were:

pigment/binder (wt.) = 45/55 (% by wt)

binder = acrylic/melamine/reactive diluent = 30/35/35 (% by wt.)

The enamel is spray-applied to Bonderite 1000 steel panels and cured at 149°C (300°F) /30 minutes. The cured coating has the following properties:

| | |
|---|---|
| Gloss (20°/60°) (angle of incident Light) | 70/85 |
| Gardner Impact J | |
| Direct | 5.6 |
| (in-lbs) | (50) |
| Reverse | 1.1 |
| (in-lbs) | (10) |

| | |
|---|---|
| Pencil Hardness | 3H |
| Knife Adhesion | Good |
| Pencil Hardness after 15 min.Cellosolve acetate immersion | H |

EXAMPLE 4

Further unpigmented acrylic polymeric polyol/ melamine coating compositions are prepared based on the following resins:

Acrylic Polyol (oligomer)

Monomeric composition: *BA/S/HEMA/AA = 50/27/20/3 (by weight)

Oligomer characteristics: $\bar{M}_w/\bar{M}_n$ = 16,000/1700

Solid/Solvent 98% in methyl m-amyl ketone

Viscosity 900 - 15,000 cps.

Melamine Resin (aminoplast)

A highly methylated melamine-formaldehyde resin is used. Non-volatile is 80% by weight in isobutanol. Viscosity is Gardner-Holdt X-Z1 at 25°C. Specific gravity of the solution is 1.12 and that of the resin solids is 1.24. This resin is available commercially as CYMEL® 325 from American Cyanamid Company.

The coatings are prepared by mixing the above resins, solvents, and reactive diluents of the present invention as follows:

---

*BA = butyl acrylate; S = styrene; HEMA = hydroxyethyl methacrylate; AA = acrylic acid.

COATING FORMULATIONS

| Parts By Weight | A | B | C | D | E |
|---|---|---|---|---|---|
| Acrylic Polyol (90%) | 48.1 | 44.7 | 41.7 | 44.9 | 41.7 |
| Melamine Resin (80%) | 15.6 | 15.6 | 15.6 | 15.6 | 15.6 |
| Bis-(β-hydroxyethyl)azelate | - | - | - | 2.5 | 5.0 |
| Bis-(β-hydroxyethyl)adipate | - | 2.5 | 5.0 | - | - |
| Cellosolve acetate | 1.9 | 1.9 | 1.9 | 1.9 | 1.9 |
| n-butanol | 16.9 | 16.9 | 16.9 | 16.9 | 16.9 |
| TOTAL | 82.5 | 81.8 | 81.1 | 81.8 | 81.1 |
| Weight percent solids | 60.6 | 61.1 | 61.7 | 61.1 | 61.7 |
| Solids weight ratio: | | | | | |
| acrylic polyol/melamine/reactive diluent | 75/25/0 | 70/25/5 | 65/25/10 | 70/25/5 | 65/25/10 |
| Brookfield viscosity, cps. 25°C. | 325 | 286 | 255 | 285 | 255 |

The coating compositions are filmed on Bonderite 1000 treated steel test panels to yield films of 1.2-1.3 mil thickness when dry. The panels are baked for 30 minutes at 121°C (250°F) and are then tested for various coating properties with results as follows. Formulations with the reactive diluents of the invention yield coatings of improved solids/viscosity balance and significantly improved impact strength and flexibility especially after overcure at higher temperature.

COATING TEST RESULTS

| Tested Property | A | B | C | D | E |
|---|---|---|---|---|---|
| Tukon hardness (KHN) | 10.9 | 9.6 | 7.1 | 9.2 | 6.5 |
| Pencil hardness | 2H | 2H | 2H | 2H | 2H |
| Cheesecloth print (82°C) (180°F) 13.8kN $m^2$ (2 psi)/30') | Tr-V-Sl | Tr | Tr | Tr-V-Sl | Tr |
| Mandrel flexibility (½"/¼"/1/8") | 0/0/0 | 0/0/0 | 0/0/0 | 0/0/0 | 0/0/0 |
| Impact resistance (in-lb) | | | | | |
| Direct | 55 | 100 | 140 | 100 | 140 |
| Reverse | 12 | 90 | 100 | 80 | 80 |
| Knife adhesion | V.Good | V.Good | Good | V.Good | Good |
| Solvent resistance (15 min.) | | | | | |
| Xylene | 6B | 6B | 6B | 6B | 6B |
| Cellosolve acetate | 6B | 6B | 6B | 6B | 6B |
| Flexibility after overbake (149°C (300°F)/60') (½"/⅓"/1/8") | 0/2/6 | 0/1/2 | 0/0/1 | 0/0/1 | 0/0/0 |

CLAIMS:

1. A thermosetting amino resin coating composition comprising:

(a) at least one hydroxy ester of the formula:

$$H(O-R^1O-\overset{O}{\overset{\|}{C}}R^2\overset{O}{\overset{\|}{C}}-)_n-O-R^3-OH$$

wherein $R^2$ represents a chemical bond or the group which would be formed by the removal of the carboxyl, anhydride or ester groups from an aliphatic dicarboxylic acid, or anhydride or ester thereof, said acid, anhydride or ester having from 2 to 13 carbon atoms; $R^1$ and $R^3$ represent the same or different groups which would be formed by the removal of the two hydroxyl groups from a diol or the oxirane oxygen atom from an epoxy compound, said diol or epoxy compound having from 2 to 12 carbon atoms, and n is an integer of from 1 to 3;

(b) an aminoplast, and

(c) an acrylic polyol oligomer having a weight average molecular weight of from 400 to 30,000 and a dispersity of from 1.1 to 10.

2. A composition as claimed in Claim 1 wherein component (a) comprises at least one bis-(β-hydroxyalkyl)ester.

3. A composition as claimed in Claim 2 wherein the ester comprises bis-(β-hydroxyethyl)adipate or bis-(β-hydroxyethyl)azelate.

4. A composition as claimed in any of claims 1 to 3 wherein component (b) comprises N-methylol and/or N-methylol ether group-containing amino resin obtained by reacting an aldehyde with a compound containing amino or amido groups.

5. A composition as claimed in Claim 4 wherein

said compound is at least partially etherified with at least one alcohol having from 1 to 6 carbon atoms.

6. A composition as claimed in any of claims 1 to 5 wherein component (c) has a weight average molecular weight of from 1000 to 20,000.

7. A composition as claimed in any of claims 1 to 6 wherein component (c) has a dispersity of from 1.1 to 3.

8. A composition as claimed in any of claims 1 to 7 wherein component (c) comprises at least one of:

(i) polymer containing units of methyl methacrylate, butyl methacrylate, hydroxyethylmethacrylate and methacrylic acid;

(ii) polymer containing units of butyl acrylate, styrene hydroxyethyl methacrylate and acrylic acid;

(iii) polymer containing units of methyl methacrylate, ethyl acrylate, styrene, hydroxyethylacrylate and itaconic acid;

(iv) polymer containing units of methyl methacrylate, butyl acrylate, hydroxypropylmethacrylate and methacrylic acid;

(v) polymer containing units of methyl methacrylate, butyl methacrylate, butyl acrylate, hydroxypropyl methacrylate and methacrylic acid.

9. A composition as claimed in any of claims 1 to 8 which comprises from 5 to 50 parts by weight of (a), from 10 to 50 parts by weight of (b) and from 30 to 80 parts by weight of (c), per 100 parts by weight of (a), (b) and (c) combined.

10. A coating composition comprising from 1 to 90% by weight of pigment and from 10 to 99% by weight of a composition according to any of claims 1 to 9.

11. A substrate bearing a coating of a composition according to any of claims 1 to 10 in cured form.

12. Use of a composition according to any of claims 1 to 10 in the coating of a substrate.